# DEMANDE DE BREVET EUROPEEN

(11) **EP 3 327 433 A1**
(43) Date de publication de la demande: **30.05.2018**
(21) Numéro de dépôt: 17202945.6
(22) Date de dépôt: 22.11.2017
(51) Int. Cl.: G01N 29/04, B23K 31/12, G01N 29/06, G01N 29/22, G01N 29/265

(54) **PROCÉDÉ DE CONTRÔLE NON-DESTRUCTIF ULTRASONORE D'UN CORDON DE SOUDURE**

(30) Priorité: 25.11.2016 FR 1661530
(71) Demandeur: SAFRAN AIRCRAFT ENGINES, 75015 Paris (FR); Centre National d'Etudes Spatiales, 75001 Paris (FR)
(72) Inventeur: CHANDELLE, André, 77550 MOISSY CRAMAYEL (FR); SKRZYPCZAK, Hervé, 77550 MOISSY CRAMAYEL (FR)
(74) Mandataire: Cabinet Beau de Loménie

(57) **Abrégé**

Procédé de contrôle non-destructif d'un cordon de soudure (18) reliant deux pièces (14, 16), une direction longitudinale (X) du cordon de soudure (18) s'étendant le long de l'interface entre les deux pièces (14, 16), le procédé comprenant la fourniture d'un émetteur (10) et d'un récepteur (12) et la réalisation d'au moins une mesure d'un signal émis par l'émetteur (10) et reçu par le récepteur (12) après avoir traversé le cordon de soudure (18), le procédé étant caractérisé en ce que l'émetteur (10) et le récepteur (12) sont positionnés par rapport au cordon de soudure (18) de sorte que le plan contenant l'axe de l'émetteur (A1) et l'axe du récepteur (A2) soit sensiblement parallèle à la direction longitudinale (X).

## Description

### DOMAINE DE L'INVENTION

Le présent exposé concerne un procédé de contrôle non-destructif, et plus particulièrement un procédé de contrôle non-destructif d'un cordon de soudure. Un tel contrôle peut notamment être mis en oeuvre par ultrasons.

### ARRIÈRE-PLAN TECHNOLOGIQUE

Pour contrôler l'intégrité et la qualité d'un cordon de soudure, il est connu d'utiliser des méthodes de contrôle non-destructif. Par exemple, on connaît un procédé de contrôle non-destructif d'un cordon de soudure reliant deux pièces, le procédé comprenant la fourniture d'un émetteur et d'un récepteur et la réalisation d'au moins une mesure d'un signal émis par l'émetteur et reçu par le récepteur après avoir traversé le cordon de soudure.

Par exemple, le contrôle peut être réalisé par ultrasons avec la technique de diffraction des temps de vol ou temps de vol de l'onde diffractée, aussi appelée « Time-of-flight diffraction » (TOFD), dont l'application standardisée est définie par la norme NF EN ISO 10863. Selon cette norme, un émetteur d'ultrasons et un récepteur d'ultrasons sont positionnés de part et d'autre du cordon de soudure, de sorte que le plan reliant leurs axes respectifs soit perpendiculaire à la direction longitudinale du cordon de soudure qui s'étend le long de l'interface entre les deux pièces. L'émetteur émet un signal qui est reçu par le récepteur après avoir traversé transversalement le cordon de soudure. Dans les cordons de soudure sans défaut, le signal reçu par le récepteur se compose de deux ondes, l'une se déplaçant à la surface du cordon de soudure, l'autre réfléchie par la paroi opposée du cordon de soudure. Cependant, lorsqu'un défaut tel qu'une fissure ou un manque de fusion est présent, le signal subit en plus une diffraction sur les extrémités dudit défaut. En utilisant le temps de vol, ou temps de parcours, du signal diffracté, la profondeur du défaut peut être calculée simplement par trigonométrie.

La mise en oeuvre d'un procédé de contrôle non-destructif utilisant un émetteur distinct du récepteur requiert que l'émetteur et le récepteur soit séparés au moins par une certaine distance. Par conséquent, dans les procédés connus, les pièces à contrôler doivent comprendre un espace accessible et peu accidenté, de part et d'autre du cordon de soudure, pour permettre le passage de l'émetteur et du récepteur de part et d'autre du cordon de soudure. Il est alors parfois nécessaire de prévoir une zone de matière qui ne sert qu'au contrôle du cordon de soudure. Une telle exigence est pénalisante pour la conception et le dimensionnement des pièces, en particulier dans les domaines tels que l'aéronautique ou l'aérospatiale dans lesquels l'économie de masse et de matière est une préoccupation constante.

Il existe donc un besoin pour un nouveau type de procédé de contrôle non-destructif d'un cordon de soudure.

### PRÉSENTATION DE L'INVENTION

A cet effet, le présent exposé concerne un procédé de contrôle non-destructif d'un cordon de soudure reliant deux pièces, une direction longitudinale du cordon de soudure s'étendant le long de l'interface entre les deux pièces, le procédé comprenant la fourniture d'un émetteur et d'un récepteur et la réalisation d'au moins une mesure d'un signal émis par l'émetteur et reçu par le récepteur après avoir traversé le cordon de soudure, le procédé étant caractérisé en ce que l'émetteur et le récepteur sont positionnés par rapport au cordon de soudure de sorte que le plan contenant l'axe de l'émetteur et l'axe du récepteur soit sensiblement parallèle à la direction longitudinale.

Au sens du présent exposé, le soudage désigne l'assemblage permanent de deux pièces en leur apportant de l'énergie de façon à créer un joint entre les deux pièces à leur interface commune. Dans cet exposé, le brasage est également considéré comme un type de soudage. Ledit joint est appelé cordon de soudure et peut résulter de l'ajout d'un matériau de soudure ou de la fusion ou du frittage partiel, sans ajout de matière, des pièces l'une avec l'autre. Les pièces peuvent être métalliques ou non, par exemple en thermoplastique ou en tout matériau susceptible d'être soudé.

La direction longitudinale peut suivre une ligne incurvée, par exemple dans le cas d'une soudure entre deux pièces courbes, ou droite, selon la forme de l'interface des pièces. Localement, la direction longitudinale est transverse à la largeur du cordon de soudure, ou encore à la plus courte distance entre les zones des deux pièces non thermiquement transformées par l'opération de soudage.

L'émetteur et le récepteur peuvent être de types connus en soi, disponibles dans le commerce. L'émetteur est spatialement séparé du récepteur, ce en quoi le procédé proposé se distingue des procédés dits « monosondes », dans lesquels la même sonde est à la fois émettrice et réceptrice. Il est possible d'utiliser l'émetteur et le récepteur selon la méthode TOFD. Dans le procédé proposé, l'émetteur présente un axe, aussi appelé axe d'émission, qui peut être l'axe du cône selon lequel est émis le signal. Le récepteur présente également un axe qui peut être défini de manière similaire. L'axe de l'émetteur et l'axe du récepteur ne sont pas confondus ; ils définissent donc un plan, appelé par la suite plan émetteur-récepteur.

Dans le procédé proposé, l'émetteur et le récepteur sont positionnés par rapport au cordon de soudure de sorte que ledit plan émetteur-récepteur est sensiblement parallèle à la direction longitudinale. Cette condition s'apprécie localement, entre l'émetteur et le récepteur, en particulier lorsque la direction longitudinale est incurvée. En outre, lorsque la direction longitudinale est incurvée, le plan émetteur-récepteur ne peut pas être strictement parallèle à la direction longitudinale, c'est pourquoi il est toléré que le plan émetteur-récepteur soit sensiblement parallèle à la direction longitudinale.

Grâce à cette caractéristique, lors du contrôle, l'émetteur et le récepteur sont placés sensiblement au droit du cordon de soudure, voire sur le cordon de soudure. Ainsi, la distance qui sépare l'émetteur du récepteur s'étend sensiblement longitudinalement par rapport au cordon de soudure et non plus transversalement comme préconisé par la norme précitée. Par suite, il est possible de réduire significativement voire de supprimer, de part et d'autre du cordon de soudure, l'espace accessible et peu accidenté dédié exclusivement au contrôle du cordon de soudure. Il s'ensuit un gain d'encombrement et de masse des pièces jointes par le cordon de soudure.

En outre, ce procédé présente un avantage supplémentaire dans le cas de certaines pièces. Par exemple, les pièces métalliques de fonderie présentent souvent une structure à gros grains équiaxes dans laquelle les ondes sont facilement réfractées, ce qui affaiblit le signal de l'émetteur à chaque joint de grain. En positionnant le plan émetteur-récepteur sensiblement parallèle à la direction longitudinale, le signal émis par l'émetteur traverse davantage le cordon de soudure que les pièces elles-mêmes. Or, le cordon de soudure présente généralement une structure à grains plus petits, si bien que les joints de grains sont moins pénalisants pour la propagation du signal. Le parcours du signal essentiellement dans le cordon de soudure affaiblit donc moins le signal, ce qui rend le procédé de contrôle non-destructif proposé applicable là où les méthodes de l'état de la technique, par exemple la méthode utilisée selon les prescriptions de la norme précitée, n'étaient pas satisfaisantes du fait d'un rapport signal sur bruit trop faible.

Dans certains modes de réalisation, l'émetteur est un émetteur à ultrasons et le récepteur est un récepteur à ultrasons. Les ultrasons conviennent particulièrement à la mise en oeuvre de la méthode TOFD.

On peut entendre par sensiblement parallèle le fait que ledit plan forme, avec la direction longitudinale, un angle d'au plus 45°, de préférence au plus 30°, de préférence au plus 20°, de préférence au plus 15°, de préférence au plus 10°, de préférence au plus 5°.

Dans certains modes de réalisation, le procédé de contrôle non-destructif comprend la réalisation de plusieurs mesures en déplaçant l'émetteur et le récepteur dans la direction longitudinale. Le déplacement dans la direction longitudinale permet de contrôler toute la longueur du cordon de soudure. Ce déplacement peut être fait de manière discrète, à plusieurs emplacements du cordon de soudure, ou de manière continue, tel un balayage le long du cordon.

Dans certains modes de réalisation, le procédé de contrôle non-destructif comprend la réalisation de plusieurs mesures en déplaçant l'émetteur et le récepteur transversalement à la direction longitudinale. Le déplacement transversalement à la direction longitudinale permet de contrôler toute la largeur du cordon de soudure. Ce déplacement peut être fait de manière discrète, à plusieurs emplacements du cordon de soudure, ou de manière continue, tel un balayage de la largeur du cordon. Un tel déplacement transversal n'est en général pas utile dans la méthode normalisée, puisque dès lors que la zone couverte par l'émetteur et le récepteur est souvent plus large que le cordon de soudure. L'intérêt d'un tel déplacement apparaît avec le procédé proposé dans le présent exposé.

De préférence, en déplaçant l'émetteur et le récepteur, on conserve entre eux une distance et/ou une orientation constante.

Ainsi, dans certains modes de réalisation, l'émetteur et le récepteur sont montés sur un même chariot. Le chariot forme un support configuré de sorte que la distance et l'orientation relatives de l'émetteur et du récepteur sont constantes.

Dans certains modes de réalisation, le procédé de contrôle non-destructif comprend l'usinage d'une surface du cordon de soudure. L'usinage peut viser à rendre plus régulière ou moins accidentée la surface du cordon de soudure, par exemple à réduire ou supprimer la surépaisseur du cordon de soudure par rapport aux pièces. Dans les cas où la méthode nécessite un contact entre l'émetteur ou le récepteur d'une part et le cordon de soudure d'autre part, une surface plus régulière du cordon de soudure améliore la stabilité du couplage de l'émetteur et du récepteur, ce qui accroît la précision des mesures, et facilite l'éventuel déplacement de l'émetteur et/ou du récepteur dans la direction longitudinale et/ou transversale.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 est une vue de principe, en coupe, de la mise en oeuvre d'une méthode TOFD selon l'état de la technique ;
- la figure 2 est une représentation schématique du positionnement d'un émetteur et d'un récepteur dans un procédé de contrôle non-destructif selon l'état de la technique ;
- la figure 3 est une représentation schématique du positionnement d'un émetteur et d'un récepteur dans un procédé de contrôle non-destructif selon un mode de réalisation ;
- la figure 4 est une image de contrôle d'un cordon de soudure obtenue avec le dispositif de la figure 2 ;
- la figure 5 est une image de contrôle d'un cordon de soudure obtenue avec le dispositif de la figure 3.

### DESCRIPTION DÉTAILLÉE DE L'INVENTION

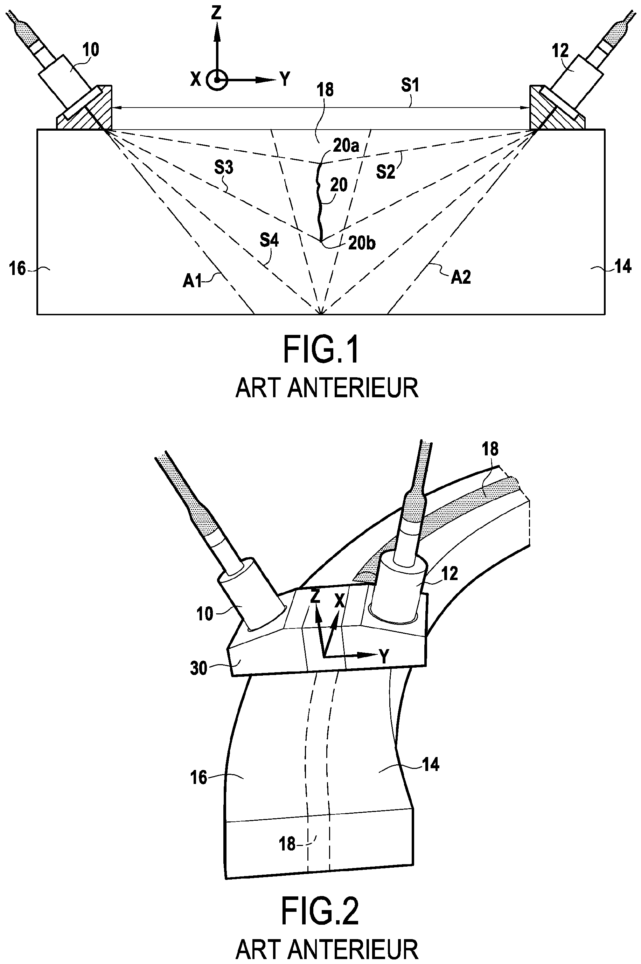

La figure 1 représente le principe d'un procédé de contrôle non-destructif d'un cordon de soudure par la méthode de temps de vol de l'onde diffractée (TOFD) selon l'état de la technique. On dispose d'un émetteur 10, ici un émetteur à ultrasons, et d'un récepteur 12, ici un récepteur à ultrasons. L'émetteur 10 et le récepteur 12 sont, en eux-mêmes, connus. La plage de fréquence utilisée peut être comprise entre 1 et 15 MHz.

Par ailleurs, un ensemble soudé comprend deux pièces 14, 16, réunies par un cordon de soudure 18. Le cordon de soudure 18 peut résulter d'un ajout de matière telle qu'un matériau de soudage. Alternativement ou en complément, le cordon de soudure 18 peut comprendre une zone d'interface entre les deux pièces 14, 16 qui ont été fusionnées, brasées ou frittées dans cette zone. Le cordon de soudure 18 a, dans cet exemple, une section sensiblement triangulaire. Cependant, toute forme possible peut être envisagée pour la section du cordon de soudure 18 en fonction des caractéristiques et de la géométrie des pièces 14, 16 à souder.

Comme indiqué précédemment, une direction longitudinale X du cordon de soudure 18 s'étend le long de l'interface entre les deux pièces 14, 16. On note Y une direction transversale et Z une direction de profondeur du cordon de soudure 18. Le repère (X, Y, Z) est de préférence orthogonal. A l'instar de la direction circonférentielle bien connue dans les systèmes de coordonnées cylindriques, la direction longitudinale X désigne à la fois la ligne, éventuellement courbe, selon laquelle s'étend le cordon de soudure 18, et la tangente en tout point à cette ligne.

Le cordon de soudure 18 peut présenter un défaut 20, en l'occurrence sous la forme d'une fissure. Le défaut 20 peut également être un manque de fusion, une soufflure, un corps étranger, un manque de brasure, etc. Le défaut 20 possède une première extrémité 20a et une deuxième extrémité 20b.

Dans la méthode dont la mise en oeuvre est représentée sur la figure 1, l'émetteur 10 et le récepteur 12 sont placés de part et d'autre du cordon de soudure 18. L'émetteur 10 possède un axe d'émission A1 et le récepteur 12 possède un axe de réception A2. L'axe d'émission A1 et l'axe de réception A2 sont sécants, de sorte qu'un signal émis par l'émetteur 10 puisse être reçu par le récepteur 12. En particulier, l'axe d'émission A1 et l'axe A2 définissent le plan émetteur-récepteur.

Comme représenté sur la figure 1, le plan émetteur-récepteur est perpendiculaire à la direction longitudinale X du cordon de soudure 18. L'émetteur 10 émet un signal qui est reçu par le récepteur 12 après avoir traversé transversalement le cordon de soudure 18. En l'occurrence, le signal se décompose en deux ondes S1 et S4 et deux ondes diffractées S2 et S3. Une première onde S1 se déplace à la surface du cordon de soudure 18. Une quatrième onde S4 est réfléchie par la paroi opposée du cordon de soudure 18, ladite paroi étant parfois appelée talon de soudure. Du fait de la présence du défaut 20, le signal émis par l'émetteur 10 subit en plus une diffraction sur les extrémités dudit défaut, d'où la présence des ondes S2 et S3. La deuxième onde S2 est diffractée par la première extrémité 20a du défaut 20. La troisième onde S3 est diffractée par la deuxième extrémité 20b du défaut 20.

La figure 2 également illustre la mise en oeuvre de la méthode TOFD selon l'état de la technique. L'émetteur 10 et le récepteur 12 sont montés sur un chariot 30. En l'espèce, les pièces 14, 16 sont annulaires, si bien que la direction longitudinale est incurvée. Comme exposé en détail précédemment, l'orientation du plan émetteur-récepteur perpendiculairement à la direction longitudinale impose un encombrement important de part et d'autre du cordon de soudure. Sur l'échantillon représenté en figure 2, le chariot 30 dépasse de part et d'autre des pièces 14 et 16.

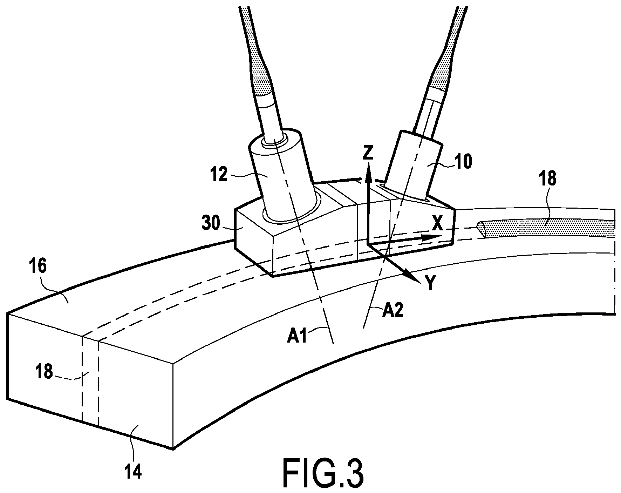

La figure 3 représente un mode de réalisation d'un procédé de contrôle non-destructif d'un cordon de soudure 18. Comme indiqué précédemment, le cordon de soudure 18 relie deux pièces 14, 16 et s'étend selon une direction longitudinale X le long de l'interface entre les deux pièces 14, 16. Un émetteur 10 et un récepteur 12 sont fournis et on réalise au moins une mesure d'un signal, du même type que les signaux S1, S2, S3, S4 décrits précédemment, émis par l'émetteur 10 et reçu par le récepteur 12 après avoir traversé le cordon de soudure 18. L'émetteur 10, le récepteur 12, les pièces 14, 16 et le cordon de soudure 18 peuvent être similaires à ce qui a été décrit au sujet de l'état de la technique.

En revanche, par différence avec l'état de la technique et comme illustré sur la figure 3, l'émetteur 10 et le récepteur 12 sont positionnés par rapport au cordon de soudure 18 de sorte que le plan contenant l'axe de l'émetteur A1 et l'axe du récepteur A2 soit sensiblement parallèle à la direction longitudinale X. Ainsi, le signal traverse longitudinalement le cordon de soudure 18. En l'espèce, la direction longitudinale X est incurvée. Le parallélisme entre le plan émetteur-récepteur et la direction longitudinale s'apprécie localement. En tout état de cause, ledit plan forme, avec la direction longitudinale X, un angle d'au plus 45°, de préférence au plus 30°, de préférence au plus 20°, de préférence au plus 15°, de préférence au plus 10°, de préférence au plus 5°.

De plus, l'émetteur 10 et le récepteur 12 sont ici montés sur un même chariot 30. Ainsi, la distance et l'orientation relatives de l'émetteur 10 et du récepteur 12 sont constantes.

Comme on peut le voir aisément en comparant la figure 3 à la figure 2, l'encombrement transversal de l'émetteur 10 et du récepteur 12, et par extension du chariot 30, par rapport aux pièces 14, 16 est bien moindre que dans la méthode de l'état de la technique puisque cet encombrement est reporté longitudinalement sur le cordon de soudure 18.

Comme indiqué précédemment, plusieurs mesures peuvent être réalisées, par exemple en déplaçant l'émetteur 10 et le récepteur 12 dans la direction longitudinale X et/ou dans la direction transversale Y. Selon un exemple, on déplace de manière discrète le chariot 30 suivant la direction X et, à intervalles réguliers, on déplace le chariot 30 de manière continue suivant la direction Y, le long de l'épaisseur du cordon de soudure 18. Le déplacement de l'émetteur 10 et du récepteur 12, voire du chariot 30, peut être automatisé et/ou contrôlé par un robot ou un ordinateur.

Les signaux S1, S2, S3, S4 reçus par le récepteur 12 peuvent être traités par un logiciel de traitement de type connu en soi, parfois appelé imageur, de façon à obtenir une représentation graphique des défauts détectés entre l'émetteur 10 et le récepteur 12.

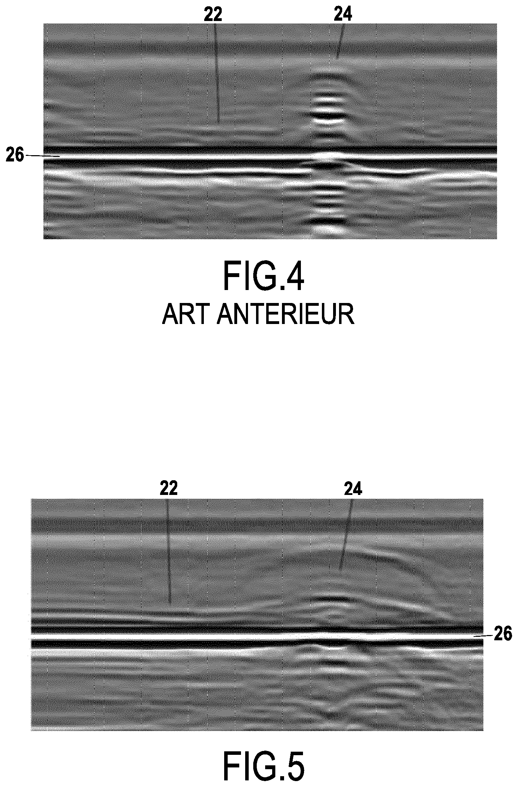

Les figures 4 et 5 sont des images obtenues à l'aide d'un tel imageur. La figure 4 est obtenue en utilisant la méthode TOFD selon l'état de la technique, c'est-à-dire avec le plan émetteur-récepteur perpendiculaire à la direction longitudinale (figure 2), tandis que la figure 5 est obtenue par le procédé dont la mise en oeuvre est représentée sur la figure 3, c'est-à-dire en positionnant l'émetteur 10 et le récepteur 12 de sorte que le plan émetteur-récepteur soit sensiblement parallèle à la direction longitudinale. Les figures 4 et 5 ont été obtenues avec le même émetteur 10 et le même récepteur 12, sur le même cordon de soudure 18, la seule différence étant le positionnement de l'émetteur 10 et du récepteur 12 par rapport audit cordon de soudure 18.

Un homme du métier reconnaît, sur la figure 4, des ondulations 22. Ces ondulations traduisent un écho dû au manque de pénétration des ultrasons et sont symptomatiques d'un manque de fusion dans le cordon de soudure 18. Il reconnaît également des franges 24 représentatives d'un orifice. En l'occurrence, ledit orifice est un perçage de référence qui permet de vérifier le bon fonctionnement de l'émetteur 10 et du récepteur 12 ainsi que leur sensibilité. Par exemple, la taille du perçage peut être représentative de la taille du plus petit défaut que l'on souhaite détecter, typiquement 1 à 2 millimètres. Enfin, sur l'échantillon considéré, l'image comporte également une bande 26 qui indique le talon de soudure.

Comme on peut le voir sur la figure 5, les ondulations 22, les franges 24 et la bande 26 sont également visibles, sous une forme éventuellement un peu modifiée, sur une image obtenue avec un plan émetteur-récepteur sensiblement parallèle à la direction longitudinale. Le changement de forme des ondulations 22 et des franges 24 est dû au changement de position et d'orientation de l'émetteur 10 et du récepteur 12 par rapport aux défauts que traduisent ces ondulations 22 et franges 24. Le contraste des défauts peut être jugé moins bon que dans l'état de la technique, ce qui pourrait paraître a priori rédhibitoire pour l'homme du métier. Cependant, les inventeurs ont démontré que lesdits défauts sont tout de même bien détectés malgré une utilisation nouvelle du procédé, typiquement une utilisation non conforme à la norme précitée. Le procédé proposé dans le présent exposé est donc tout à fait apte à remplacer les procédés existants, et offre une plus grande liberté de conception sur les pièces 14, 16.

Dans les cas où au moins l'un de l'émetteur 10, du récepteur 12 et du chariot 30 repose sur la surface du cordon de soudure 18 lors du contrôle, il peut être avantageux, préalablement à la réalisation des mesures, d'usiner une surface du cordon de soudure 18. L'usinage peut être réalisé de manière connue en tant que telle et de façon à obtenir une surface plane du cordon de soudure 18, voire du cordon de soudure 18 et d'une zone des pièces 14, 16 adjacente au cordon de soudure 18 (voir figure 3). On garantit ainsi une incidence constante de l'émetteur 10 par rapport au cordon de soudure ainsi qu'une faible intensité des échos parasites.

Bien que l'on ait toujours représenté l'émetteur 10 et le récepteur 12 en contact avec le cordon de soudure 18, par exemple par l'intermédiaire du chariot 30, il est possible de prévoir un espace entre l'émetteur 10 et le cordon de soudure 18, ou encore entre le récepteur 12 et le cordon de soudure 18. La réalisation d'un support approprié pour garantir la précision des mesures et du positionnement de l'émetteur 10 et du récepteur 12 par rapport au cordon de soudure 18 est à la portée de l'homme du métier.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Procédé de contrôle non-destructif d'un cordon de soudure (18) reliant deux pièces (14, 16) par la technique de temps de vol de l'onde diffractée, une direction longitudinale (X) du cordon de soudure (18) s'étendant le long de l'interface entre les deux pièces (14, 16), le procédé comprenant la fourniture d'un émetteur (10) et d'un récepteur (12) et la réalisation d'au moins une mesure d'un signal (S1, S2, S3, S4) émis par l'émetteur (10) et reçu par le récepteur (12) après avoir traversé le cordon de soudure (18), le procédé étant **caractérisé en ce que** l'émetteur (10) et le récepteur (12) sont positionnés par rapport au cordon de soudure (18) de sorte que le plan contenant l'axe de l'émetteur (A1) et l'axe du récepteur (A2) soit sensiblement parallèle à la direction longitudinale (X).

2. Procédé de contrôle non-destructif selon la revendication 1, dans lequel l'émetteur (10) est un émetteur à ultrasons et le récepteur (12) est un récepteur à ultrasons.

3. Procédé de contrôle non-destructif selon la revendication 1 ou 2, comprenant la réalisation de plusieurs mesures en déplaçant l'émetteur (10) et le récepteur (12) dans la direction longitudinale (X).

4. Procédé de contrôle non-destructif selon l'une quelconque des revendications 1 à 3, comprenant la réalisation de plusieurs mesures en déplaçant l'émetteur (10) et le récepteur (12) transversalement à la direction longitudinale.

5. Procédé de contrôle non-destructif selon l'une quelconque des revendications 1 à 4, dans lequel l'émetteur (10) et le récepteur (12) sont montés sur un même chariot (30).

6. Procédé de contrôle non-destructif selon l'une quelconque des revendications 1 à 5, comprenant l'usinage d'une surface du cordon de soudure (18).
